# EUROPEAN PATENT APPLICATION

(11) **EP 4 730 121 A1**
(43) Date of publication of application: **22.04.2026**
(21) Application number: 24895907.4
(22) Date of filing: 12.09.2024
(51) Int. Cl.: G06F 9/451

(54) **DISPLAY METHOD, ELECTRONIC DEVICE AND COMPUTER READABLE MEDIUM**

(30) Priority: 30.11.2023 CN 202311654628
(71) Applicant: Huawei Technologies Co., Ltd., Shenzhen, Guangdong 518129 (CN)
(72) Inventor: WU, Guoxing, Shenzhen, Guangdong 518129 (CN); ZHANG, Chao, Shenzhen, Guangdong 518129 (CN); JIANG, Wenming, Shenzhen, Guangdong 518129 (CN); CAO, Yuan, Shenzhen, Guangdong 518129 (CN); FAN, Zhenhua, Shenzhen, Guangdong 518129 (CN)
(74) Representative: Maiwald GmbH
(86) International application number: PCT/CN2024/118589
(87) International publication number: WO 2025/112809

(57) **Abstract**

This application relates to the field of computer technologies, and specifically, to a display method, an electronic device, and a computer-readable medium. A display parameter that affects a foreground element, including a related parameter like a display location of the foreground element in a corresponding background image area, in a set target interface is adjusted, so that the foreground element in the set target interface can be laid out to a location at which the foreground element interacts with a salient subject. In this way, according to the display method provided in this application, when a background image is set in the target interface, foreground elements such as a time component and a notification component can be laid out to locations at which the foreground elements interact with a feature like an action of the salient subject like a person in the original background image. This helps improve interest of the target interface.

## Description

This application claims priority to Chinese Patent Application No. 202311654628.9, filed with the China National Intellectual Property Administration on November 30, 2023 and entitled "DISPLAY METHOD, ELECTRONIC DEVICE, AND COMPUTER-READABLE MEDIUM", which is incorporated herein by reference in its entirety.

### TECHNICAL FIELD

The present invention relates to the field of computer technologies, and specifically, to a display method, an electronic device, and a computer-readable medium.

### BACKGROUND

As terminal electronic devices such as mobile phones, tablet computers, or smart watches play an increasingly important role in people's life, screen display content of the electronic device also carries more functions, and users raise an increasingly high requirement on aesthetics of the screen content. Use of an image locally stored in the electronic device as an interface background, for example, a lock screen wallpaper or a home screen wallpaper, has become a common choice for the user. The image may be, for example, an image shot by a camera or an image downloaded by the user.

Due to limitations of a screen size and a widget size of the terminal device, the image needs to be cropped based on a specific aspect ratio. In addition, a lock screen interface, a home screen, or the like of the mobile phone further displays a clock component, a lock screen notification, a floating notification, and the like, and these components are usually laid out at fixed locations in the lock screen interface or the home screen. As a result, a cropped image used as the interface background is usually blocked by the clock component, the lock screen notification, the floating notification, or the like, composition formed by combining the cropped image and a related component, a floating window, or the like has poor aesthetics, and user experience is affected.

### SUMMARY

In view of this, this application provides a display method, an electronic device, and a computer-readable medium. In some interface display scenarios, when a related component is controlled to be laid out on a background image, the related component can interact with a salient subject.

According to a first aspect, this application provides a display method, applied to an electronic device. The method includes: detecting an interface display instruction; and displaying a first interface in response to the interface display instruction, where the first interface includes at least one first foreground element and a first background image area in a first background image, where a display parameter of the first foreground element in the first background image area includes a location parameter of the first foreground element, and the location parameter is related to semantic information of at least one display element in the first background image area.

For example, the first foreground element may be a time component, a notification component, or the like displayed in a home screen or a lock screen interface. The first background image may be an image set by a user as a wallpaper of the home screen or the lock screen interface, and may be described as an original background image below. The corresponding first background image area may be a partial area that is obtained through cropping from the first background image and that adapts to a screen size of an electronic device like a mobile phone. The display parameter including the location parameter of the first foreground element may be, for example, a related parameter that determines a display location of the time component, the notification component, or the like in the home screen or the lock screen interface. The at least one display element in the first background image area may be, for example, a salient subject in the original background image, including a salient subject like a person, an animal, a plant, food, a building, or a landscape.

It may be understood that the semantic information may be a result obtained by performing image semantic understanding on the original background image, and the semantic information may include one or more salient subjects included in the image, descriptions such as an action or a form of the salient subject, and related descriptions such as a corresponding action object or a form extension direction.

In a possible implementation of the first aspect, the semantic information includes one or more of the following features: an action-related feature and a form-related feature.

In a possible implementation of the first aspect, the action-related feature includes one or more of the following features: a feature used to describe an action, and a feature used to describe an object of the action.

For example, in the action-related feature, the feature used to describe the action may be a feature like "kick", "run", "jump", "grasp", or "hold"; and the feature used to describe the object of the action may be an action object feature like a "football" or a "flower". This is not limited herein.

In a possible implementation of the first aspect, the form-related feature includes one or more of the following features: a feature used to describe a form, and a feature used to describe an extension direction of the form.

For example, in the form-related feature, the feature used to describe the form may be a feature used to describe a form of a "big tree", and the feature used to describe the extension direction of the form may be a feature used to describe extension directions of a branch and a leaf of the big tree. This is not limited herein.

It may be understood that the action-related feature and/or the form-related feature may be a feature of any one of the at least one display element. If there are a plurality of salient subjects in the original background image, representation degrees of the salient subjects may be calculated by using a saliency detection algorithm or the like, to determine a salient subject with a highest representation degree or a representation degree higher than a corresponding threshold as a display element to which the action-related feature and/or the form-related feature belong/belongs.

A size of the first background image area is related to a screen size of the electronic device and a size parameter in an initial display parameter of the first foreground element. The screen size of the electronic device may include width and height values of the screen. An aspect ratio of the screen may be determined based on the width and height values, then an aspect ratio of the first background image area is determined, and an appropriate cropped area in the original background image is determined as the first background image area based on the aspect ratio. In addition, the initial display parameter of the first foreground element may be, for example, a related parameter like a size, a color, or a font of the time component, the notification component, or the like. The size of the time component, the notification component, or the like may be understood as the size parameter in the initial display parameter.

In a possible implementation of the first aspect, before displaying the first interface, the method further includes: performing image semantic understanding on the first background image, to obtain the semantic information related to the at least one display element and area location information corresponding to a feature included in the semantic information; determining first area location information corresponding to a first feature in the feature included in the semantic information; and determining the location parameter of the first foreground element based on the first area location information.

For example, the first feature may be a feature that describes an action, for example, "kick". In this case, determining the location parameter of the first foreground element based on the first area location information corresponding to the first feature may be determining location information of an area in which a virtual object corresponding to the action described by the first feature is located, for example, location information of a possible area in which a virtual object like a football or another object of the action "kick" is located is determined as the location parameter of the first foreground element.

In a possible implementation of the first aspect, the first feature is the feature used to describe the object of the action, and determining the location parameter of the first foreground element based on the first area location information includes: determining the first area location information as the location parameter of the first foreground element.

For example, the first background image may be understood as the original background image, and the semantic information that is related to the at least one display element and that is correspondingly obtained through the image semantic understanding may include information such as a salient subject located in the first background image area, an action of the salient subject, and an action object. The action object is an object on which the salient subject acts. For example, an object of the action "kick" may be a "football". The first feature may be, for example, the action object of the salient subject, for example, the "football". The first area location information corresponding to the first feature may be location information of the football in a corresponding image.

The feature included in the semantic information may be, for example, a field that can express different area location information and that is in semantic information obtained through extraction in a semantic segmentation process described in the following embodiments. Correspondingly, the area location information corresponding to the feature may correspond to area location information corresponding to each field in the semantic information. Therefore, a process of determining the location parameter of the first foreground element described in the foregoing implementation may be understood as a process of replacing an initial location parameter of the first foreground element with the first area location information corresponding to the first feature. For example, an initial location parameter of the time component, the notification component, or the like is replaced with a location parameter correspondingly determined based on the location information of the "football" in the corresponding image.

In a possible implementation of the first aspect, the display parameter further includes a color parameter of the first foreground element, and the color parameter is related to one or more of the following colors: an initial color of the first foreground element; a background color of an area in which the feature used to describe the object of the action is located; a background color of an area in which the feature used to describe the extension direction of the form is located; and a color of a first display element in the at least one display element.

For example, in some embodiments, the color parameter included in the display parameter of the first foreground element may be a color parameter in the initial display parameter of the first foreground element, for example, a correspondingly preset color parameter of the time component or the notification component, namely, a color parameter correspondingly indicated by first color information. In some other embodiments, the color parameter included in the display parameter of the first foreground element may alternatively be a color parameter corresponding to a background color of an area in which the action object of the salient subject in the original background image is located, for example, a color parameter corresponding to a background color of an area in which the "football" or the "flower" is located. When the salient subject in the original background image is the landscape, the building, or the like, for example, the "big tree", the color of the first foreground element may alternatively be an area background color indicated by the extension direction of the form of the salient subject in the corresponding image. For example, the color of the time component may be an area background color in the extension directions of the branch and the leaf of the big tree. The color of the first foreground element may alternatively be a color that adapts to a color of the salient subject. For example, the color of the time component may be a color similar to or in contrast to a color of a person's clothes. This is not limited herein.

In a possible implementation of the first aspect, a manner of determining the first background image area includes: determining, based on a screen size of the electronic device, a size parameter of a first cropping frame used to obtain the first background image area through cropping on the first background image; determining, based on first semantic information of a first display element, location information of the first display element in the first background image, and a size parameter of the first display element, at least one cropped area that meets the size parameter of the first cropping frame and that includes the first display element, where the at least one display element includes the first display element; and determining a first cropped area in the at least one cropped area as the first background image area.

In a possible implementation of the first aspect, the size parameter of the first cropping frame is further related to a size parameter of the first foreground element, and the manner of determining the first background image area includes: determining the size parameter of the first cropping frame based on the screen size of the electronic device and the size parameter of the first foreground element.

In other words, several cropped areas may be determined from the original background image based on the screen size of the electronic device and the size of the first foreground element like the time component or the notification component. Further, based on the semantic information related to the display element like the salient subject in the original background image, for example, "a player kicks a football", and the location information, the size parameter, and the like of the salient subject in the original background image, a cropped area, for example, the first cropped area, may be screened out from the several cropped areas that meet the size parameter of the first cropping frame and is used as the first background image area.

In a possible implementation of the first aspect, the at least one cropped area is a plurality of cropped areas, and determining the first cropped area in the at least one cropped area as the first background image area includes: performing aesthetic scoring on the at least one cropped area, and determining the first cropped area whose aesthetic score meets a third condition as the first background image area, where the third condition includes that the aesthetic score is higher than a second threshold or is a highest value in aesthetic scores.

In other words, the first background image area may be a cropped area that is in the several cropped areas that meet the size parameter of the first cropping frame and whose corresponding aesthetic score is higher than the corresponding threshold, or may be a cropped area whose corresponding aesthetic score is the highest. This is not limited herein.

In a possible implementation of the first aspect, the first interface includes a lock screen interface or a home screen, and the interface display instruction includes: a display instruction that is correspondingly triggered by a first user operation and that instructs to display the lock screen interface; or a display instruction that is correspondingly triggered by a second user operation and that instructs to display the home screen.

The first interface may be a target interface in which the user performs an operation like setting the background image. The target interface may be, for example, the home screen or the lock screen interface displayed on the electronic device like the mobile phone. This is not limited herein.

It may be understood that, when the display parameter of the foreground element that can affect a layout of the set target interface is adjusted, the screen size, and the size, the location, and the like of the salient subject in the original background image are used as layout constraints, so that the foreground element in the set target interface can be fused with some action-related features, form (morphe)-related features, color features, representation features, and the like of the salient subject, to finally achieve interface display effect with strong interaction and aesthetics.

In some embodiments, the process of determining the display parameter of the first foreground element or the like or the process of performing fusion may be implemented by using a pre-trained machine learning model, a neural network model, or the like, for example, through saliency detection and by using a composition scoring model. This is not limited herein.

According to a second aspect, this application provides an electronic device, including one or more processors, and one or more memories. The one or more memories store one or more programs, and when the one or more programs are executed by the one or more processors, the electronic device is enabled to perform the display method according to the first aspect and the possible implementations of the first aspect.

According to a third aspect, this application provides a computer-readable medium. The readable medium stores instructions, and when the instructions are executed on a computer, the computer is enabled to perform the display method according to the first aspect and the possible implementations of the first aspect.

According to a fourth aspect, an embodiment of this application provides a computer program product, including a computer program/instructions. When the computer program/instructions are executed by a processor, the display method according to the first aspect and the possible implementations of the first aspect is implemented.

For beneficial effect of the second aspect to the fourth aspect, refer to related descriptions in the first aspect and the possible implementations of the first aspect. Details are not described herein again.

### BRIEF DESCRIPTION OF DRAWINGS

FIG. 1 is a diagram of an application scenario of a display method according to an embodiment of this application;
FIG. 2a is a diagram of a lock screen interface correspondingly displayed on a mobile phone in response to an operation of setting, by a user as a background image of a set target interface, an image including a human subject according to an embodiment of this application;
FIG. 2b is a diagram of another lock screen interface correspondingly displayed on a mobile phone in response to an operation of setting, by a user as a background image of a set target interface, an image including a human subject according to an embodiment of this application;
FIG. 2c is a diagram of a lock screen interface correspondingly displayed on a mobile phone in response to an operation of setting, by a user, a landscape image as a background image of a set target interface according to an embodiment of this application;
FIG. 2d is a diagram of a home screen correspondingly displayed on a mobile phone in response to an operation of setting, by a user as a background image of a set target interface, an image including a human subject according to an embodiment of this application;
FIG. 3 is a diagram of a system framework that can implement a display method and an implementation principle according to an embodiment of this application;
FIG. 4 is a diagram of an implementation procedure of a display method according to Embodiment 1 of this application;
FIG. 5a is a diagram of an image browsing interface that is displayed on a mobile phone and that supports a user operation according to Embodiment 1 of this application;
FIG. 5b is a diagram of a setting interface that is displayed on a mobile phone and that supports a user operation according to Embodiment 1 of this application;
FIG. 5c is a diagram of another setting interface that is displayed on a mobile phone and that supports a user operation according to Embodiment 1 of this application;
FIG. 5d is a diagram of a lock screen interface displayed on a mobile phone according to Embodiment 1 of this application;
FIG. 6 is a diagram of a process in which a composition scoring model determines a recommended layout parameter based on a layout constraint of an input model according to Embodiment 1 of this application;
FIG. 7 is a diagram of technical implementation principles of image semantic understanding and natural language understanding that are used in a display method according to Embodiment 1 of this application;
FIG. 8 is a diagram of an implementation procedure of a display method according to Embodiment 2 of this application;
FIG. 9 is a diagram of a structure of an electronic device according to an embodiment of this application; and
FIG. 10 is a block diagram of an operating system software structure of an electronic device according to an embodiment of this application.

### DESCRIPTION OF EMBODIMENTS

To make objectives, technical solutions, and advantages of embodiments of this application clearer, the following describes the technical solutions in embodiments of this application in detail with reference to accompanying drawings and specific implementations of the specification.

It should be further declared that, in embodiments of this application, the steps in the method and the procedure are numbered for ease of reference, instead of limiting a sequence. If there is a sequence between the steps, the text description shall be used.

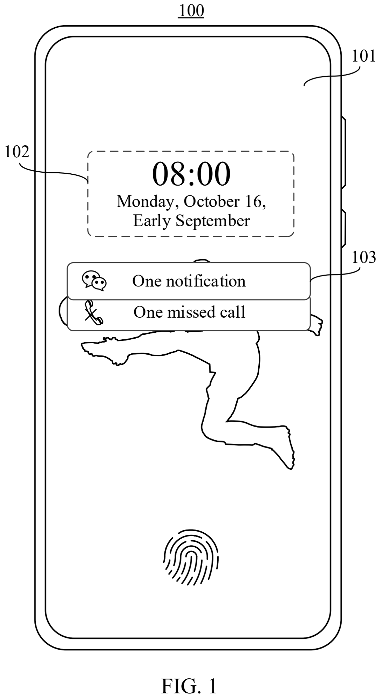

FIG. 1 is a diagram of an application scenario of a display method.

As shown in FIG. 1, the scenario includes a mobile phone 100. In a screen-locked state, a lock screen interface 101 displayed on the mobile phone 100 may include a lock screen wallpaper, a clock component 102, a lock screen notification 103, and the like. The lock screen wallpaper may be set by a user by using a photo shot by the mobile phone 100, a downloaded image, or the like, for example, a wallpaper correspondingly set by using an image of "a player kicking a football" shown in FIG. 1. Currently, the lock screen wallpaper set by the user is usually a cropped image obtained by cropping an original background image to adapt to an aspect ratio of a screen. On this basis, the mobile phone 100 draws and renders, according to a preset layout rule, a clock component, a lock screen notification, and the like that are to be laid out and the cropped image for composition and display, and the lock screen interface 101 shown in FIG. 1 may be displayed.

However, a cropping rule used by the mobile phone 100 to respond to setting of the user for the cropped image is usually a fixed preset rule like center-aligned cropping, and the layout rule used by the mobile phone 100 to compose the lock screen interface is usually also performing layout based on a preset location and a preset size of a corresponding component. Therefore, the component displayed in the lock screen home screen of the mobile phone 100 may block a feature of a salient subject like a person in the lock screen wallpaper, for example, a face, a limb, or an action of the person. In addition, when the mobile phone 100 receives notification information (for example, WeChat^{™} or a missed call), a display location of the lock screen notification 103 may also cover the feature of the salient subject in the lock screen wallpaper. Consequently, aesthetics of the lock screen interface is poor, and visual experience of the user also deteriorates.

To resolve the foregoing problem, this application provides a display method. Specifically, in the method, a display parameter that affects a foreground element, including parameters such as a size of the foreground element, and a location and a color of the foreground element relative to a salient subject in a background image, in a set target interface is adjusted, so that the foreground element in the set target interface can be laid out to a location at which the foreground element interacts with the salient subject. Related features such as a size and a location of the salient subject in the background image may be determined based on a size, a location, and the like of the related salient subject in the original background image that are correspondingly determined by performing image semantic understanding on the corresponding original background image. Based on this, in this application, the size, the location, and the like of the related salient subject in the original background image as well as a screen size of an electronic device may be used as layout constraints for adjusting the foreground element in the set target interface, to adjust the parameters such as the correspondingly preset size, location, and color of the foreground element in the set target interface.

It may be understood that the screen size of the electronic device may restrict an interface size of the set target interface. For example, an aspect ratio of the set target interface may be the same as an aspect ratio of the screen. The foreground element, for example, a component displayed in the set target interface includes a clock component, a notification component, and the like. Correspondingly, the display parameter of the foreground element that is correspondingly adjusted in this application may include a component size, a component location, a component color, and the like of a related component. The display parameter of the foreground element, for example, the parameters such as the component size, the component location, and the component color of the related component is adjusted, so that when the related component is controlled to be laid out on the background image, the related component can interact with the salient subject. In addition, to enhance interaction effect, a cropped area corresponding to the background image may also be optimized by performing aesthetic scoring, to improve composition aesthetics of the set target interface formed by laying out the foreground element on the background image.

In this way, the target interface of the background image is set by using the display method provided in this application, so that interaction and interest between the salient subject in the original background image and the related component can be reflected. In addition, in a process of adjusting the display parameter of the foreground element like the related component, the cropped area that is on the original background image and that corresponds to the background image is optimized in a manner like aesthetic scoring. This also helps improve the composition aesthetics of the set target interface.

The salient subject may include a person, an animal, a plant, food, a building, a landscape, or the like. Correspondingly, the feature that is of the salient subject and that is determined based on the image semantic information may include an action feature of a person or an animal, a form-related feature of a plant, a color feature of food, a feature of a representative building or a landscape, and the like. This is not limited herein. The representative building may be a building that is in a plurality of buildings and whose representation degree is higher than a corresponding threshold in the original background image, and the representative landscape may be a landscape that is in a plurality of landscapes and whose representation degree is higher than a corresponding threshold. In some embodiments, when there are a large quantity of salient subjects such as persons or animals in the original background image, one subject like a person or an animal may be determined, by calculating representation degrees of the subjects, as a salient subject for extracting a related feature. The representation degree may be obtained by processing the original background image by using a saliency detection algorithm or the like. Details are not described herein.

In this embodiment of this application, the image semantic information may be used by a digital computer or a machine controlled by a digital computer to understand content included in the image. For example, when the salient subject in the original background image is a person, the user may understand, based on an action and an action object of the person, that the image indicates that a player is kicking a football. Similarly, the machine may also obtain, through extraction based on the image semantic information of the original background image, information such as person information "player", a person's action "kick", an action object "football", and a color of the action object. Therefore, the image semantic information may include but is not limited to a color feature, a texture feature, a shape feature, and the like, and may express feature information that is close to content understood by the user.

It may be understood that, in this application, when the display parameter of the foreground element that can affect a layout of the set target interface is adjusted, the screen size, and the size, the location, and the like of the salient subject in the original background image are used as the layout constraints, so that the foreground element in the set target interface can be fused with some action-related features, form (morphe)-related features, color features, representation features, and the like of the salient subject, to achieve interface display effect with strong interaction and aesthetics. In some embodiments, the fusion process may be implemented by using a pre-trained machine learning model, a neural network model, or the like. This is not limited herein.

The form-related feature may include, for example, a shape and a form extension direction of the salient subject, for example, branch and leaf shapes of a big tree and extension directions of the branch and the leaf. This is not limited herein.

It may be understood that the set target interface to which the display method provided in this application is applicable may include a lock screen interface, a home screen, or the like displayed on an electronic device like a mobile phone. In some other embodiments, the set target interface may alternatively include another interface suitable for adjusting a display parameter by using the display method. This is not limited herein.

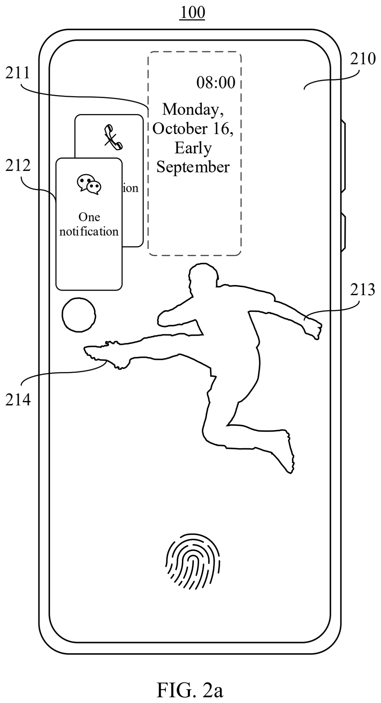

For example, FIG. 2a to FIG. 2d are diagrams of interfaces correspondingly displayed when a display method is applied to a mobile phone according to an embodiment of this application.

Refer to FIG. 2a. In a lock screen interface 210 displayed on the mobile phone 100, a cropped image set as a lock screen wallpaper is the image of "the player kicking the football". In this case, after cropping, according to the display method provided in this application, an image related to "the player kicking the football" in an original background image to obtain the cropped image, the mobile phone 100 may adapt, above an action "kick" of a "player" 213, a clock component 211, a lock screen notification 212, and the like that need to be laid out in the lock screen interface 210 for display. In this way, the clock component, the lock screen notification, and the like can be prevented from blocking a salient subject like the "player" on the wallpaper, and the lock screen interface 210 displayed on the mobile phone 100 can further show interaction effect in which the action "kick" of the "player" 213 kicks the football, the lock screen notification 212, and the clock component 211. This improves interaction and interest, and facilitates visual experience of a user.

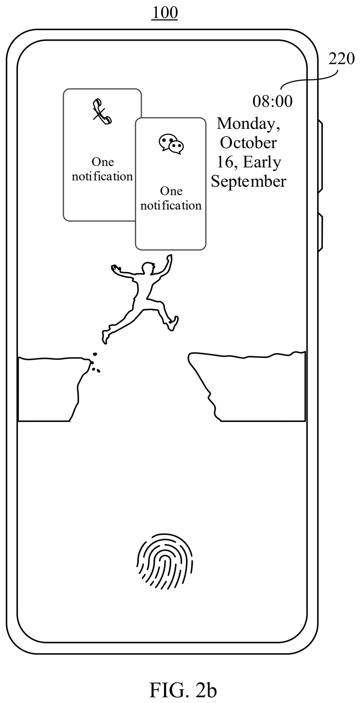

In some other embodiments, the cropped image used as the lock screen wallpaper may alternatively be another person used as the salient subject, and the subject presents a body action in another form. Refer to FIG. 2b. In a lock screen interface 220 displayed on the mobile phone 100, a cropped image set as a lock screen wallpaper is an image of "a person crossing a cliff". In this case, according to the display method provided in this application, the mobile phone 100 may adapt, above an action of "swinging" arms upon crossing of the "person", a clock component, a lock screen notification, and the like that need to be laid out in the lock screen interface 220 for display. In this way, the clock component, the lock screen notification, and the like can be prevented from blocking a salient subject like the "person" on the lock screen wallpaper, and the lock screen interface 220 displayed on the mobile phone 100 can further show interaction effect in which the swung arms of the "person" lift the lock screen notification and the clock component. This improves interaction and interest, and facilitates visual experience of a user.

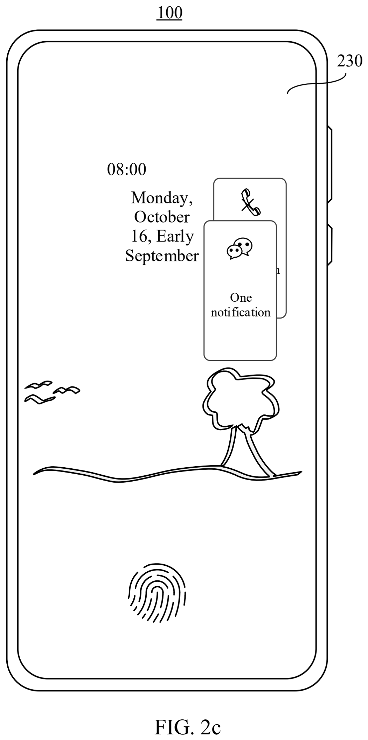

In some embodiments, the salient subject in the cropped image set as the lock screen wallpaper may alternatively be a plant, a landscape, or the like. Refer to FIG. 2c. In a lock screen interface 230 displayed on the mobile phone 100, a cropped image set as a lock screen wallpaper may be a landscape with a "big tree" and "birds". In this case, according to the display method provided in this application, the mobile phone 100 may adapt, above the salient subject "big tree", a clock component, a lock screen notification, and the like that need to be laid out in the lock screen interface 230 for display. In this way, the clock component, the lock screen notification, and the like can be prevented from blocking a salient subject like the "big tree" on the lock screen wallpaper, and the lock screen interface 230 displayed on the mobile phone 100 can further show interaction effect in which a representative feature "tree top" of the "big tree" lifts the lock screen notification and the clock component above the "tree top". This improves interaction and interest, and facilitates visual experience of a user.

In some embodiments, the mobile phone 100 may alternatively correspondingly set an interface of a home screen or another application by implementing the display method provided in this application. Correspondingly, a component that needs to be laid out for display in the interface of the home screen or the another application may also include a widget component, an application icon, and the like. This is not limited herein.

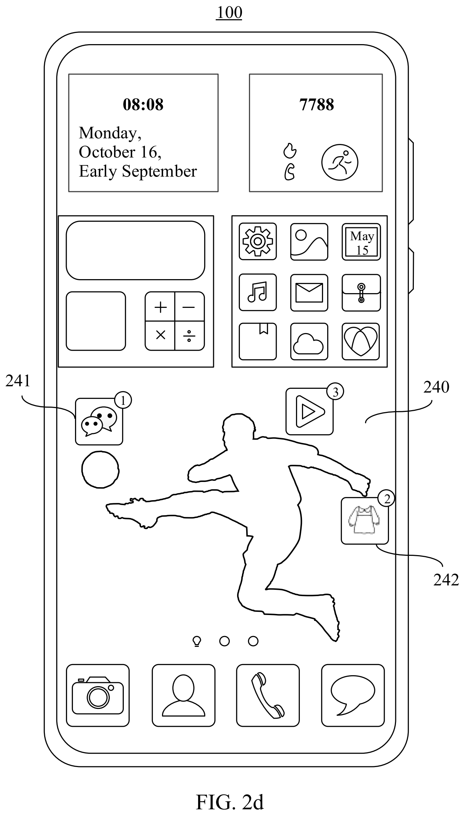

Refer to FIG. 2d. In a home screen 240 displayed on the mobile phone 100, a cropped image set as a home screen wallpaper continues to use the image of "the player kicking the football" as an example. According to the display method provided in this application, the mobile phone 100 may adapt, above the ball "kicked out", below the "swung" arm, and other locations when the "player" kicks the football, an icon of a WeChat^{™} application 241, an icon of a theme application 242, and the like that need to be displayed in the home screen 240. In this way, the application icon or some widget components can be prevented from blocking a salient subject like the "player" on the home screen wallpaper, and the home screen 240 displayed on the mobile phone 100 can further show interaction effect in which the "player" kicks the football and the "WeChat^{™} application 241" and picks up the "theme application 242". This improves interaction and interest, and facilitates visual experience of a user.

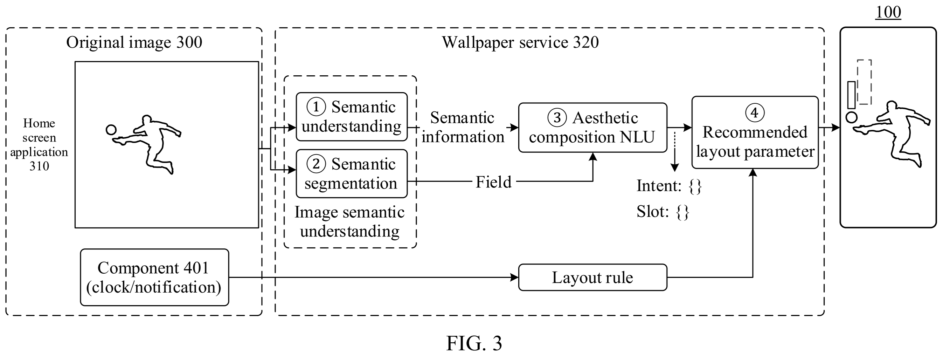

For example, FIG. 3 is a diagram of a system framework that can implement the display method and an implementation principle according to an embodiment of this application.

It may be understood that, for a lock screen interface, a component 401 that needs to be displayed may include the clock component, the lock screen notification, and the like. For a home screen, the component 401 that needs to be displayed on the mobile phone 100 may include widget components that provide different services, such as a clock widget, a suggestion widget, and an application widget, icons of some applications, and the like. This is not limited herein.

Still refer to FIG. 3. A wallpaper service 320 may have an image semantic understanding function, and can execute tasks such as "① semantic understanding" and "② semantic segmentation" shown in FIG. 3 on an original background image 300. For example, semantic information correspondingly expressed by the original background image 300 may be determined as that "a player kicks a football" through "① semantic understanding". Correspondingly, in a process of "② semantic segmentation", the original background image 300 may be segmented, to obtain location information of areas corresponding to fields such as the "player" and the "football". In this way, the fields such as the "player" and the "football" in the semantic information may be associated with the location information of the corresponding areas.

It may be understood that the semantic understanding function may be based on some image semantic understanding systems or models, for example, an image processing model for generating a harmonious text layout on a natural image through deep aesthetic learning. The model may be obtained through training based on a convolutional neural network (convolutional neural network, CNN) model, or may be obtained through training based on a recurrent neural network (recurrent neural network, RNN). This is not limited herein.

For the semantic information correspondingly determined by the image semantic understanding function and the field obtained through segmentation, the wallpaper service 320 may perform intent recognition and slot filling based on a preconfigured natural language understanding (natural language understanding, NLU) model, for example, "③ aesthetic composition NLU" shown in FIG. 3. In other words, an intent and a slot that are expressed by the semantic information corresponding to the original background image 300 are determined. Refer to "intent {}" and "slot {}" shown in FIG. 3.

Still refer to FIG. 3. "Intent {}" and "slot {}" that are identified by the NLU model are used as layout constraints, and a related layout rule of the component 401 provided by a home screen application 310 is combined, to replace parameters such as a component location, a component size, and a component color in the related layout rule of the component 401, so that a recommended layout parameter that can be used to lay out the component 401 for interacting with the salient subject of the original background image 300 can be determined. Finally, the mobile phone 100 may display corresponding interface layout effect based on the recommended layout parameter that is determined.

Specifically, for a specific implementation process of the display method shown in FIG. 3, refer to the following detailed descriptions with reference to related embodiments and accompanying drawings. Details are not described herein.

It may be understood that an electronic device to which the display method provided in embodiments of this application is applicable may include but is not limited to a mobile phone, a tablet computer, a desktop computer, a laptop computer, a handheld computer, a netbook, an augmented reality (augmented reality, AR) or virtual reality (virtual reality, VR) device, a smart television, a wearable device like a smart watch, a head unit device, a portable game console, a portable music player, a reader device, or an electronic device having one or more displays and one or more processors.

Based on the application scenario shown in FIG. 1, the following describes, with reference to specific embodiments, the specific implementation process of the display method provided in this application.

### Embodiment 1

An embodiment of this application describes a specific implementation process of a display method in the application scenario shown in FIG. 1. In this implementation process, with reference to a related feature of a salient subject in an original background image, a location and a size of each component that needs to be displayed in a set target interface may be properly laid out, to form a set target interface layout with interaction and aesthetics. In addition, in the specific implementation process of the display method provided in this embodiment of this application, aesthetic scoring can be further performed on the original background image set as the background image of the set target interface to select an appropriate cropped area. This helps improve composition aesthetics of the set target interface.

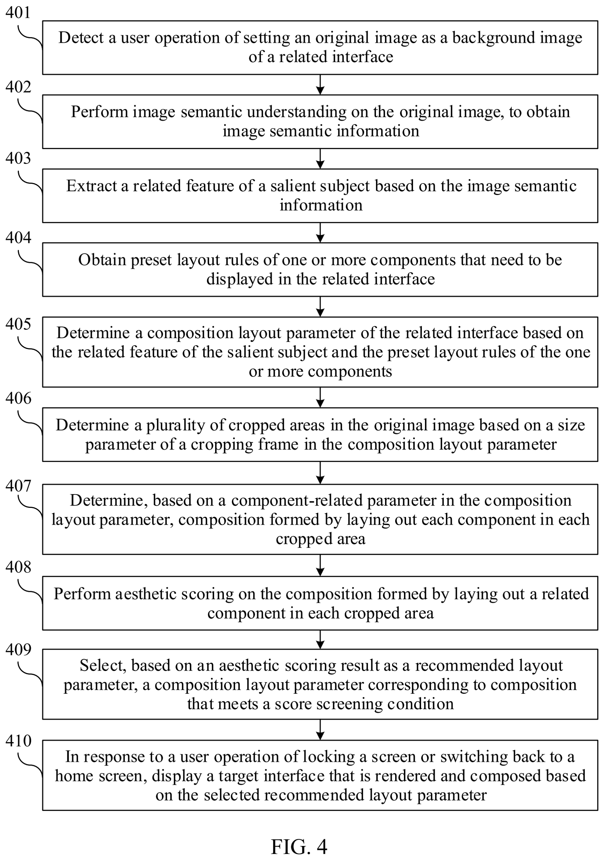

Specifically, FIG. 4 is a diagram of an implementation procedure of a display method according to this embodiment of this application. It may be understood that steps in the implementation procedure shown in FIG. 4 may be performed by an electronic device like a mobile phone or a tablet computer. This is not limited herein.

The following still uses an example in which the mobile phone 100 performs the steps to describe, in detail with reference to FIG. 4, the specific implementation process of the display method provided in this application.

As shown in FIG. 4, the implementation procedure may include the following steps.

401: Detect a user operation of setting an original background image as a background image of a set target interface.

For example, the original background image may be an image stored in the mobile phone 100, including a photo shot by a user by using the mobile phone 100, a downloaded image, an image in a video, or the like. This is not limited herein. Correspondingly, the set target interface may be an interface including the background image and one or more components displayed on the background image, for example, a lock screen interface or a home screen displayed on the mobile phone 100. In some other embodiments, the set target interface may alternatively be a chat interface of an instant messaging application or the like. This is not limited herein. Correspondingly, the user operation of setting the background image may include setting a lock screen wallpaper, a home screen wallpaper, a chat background of a chat interface, or the like.

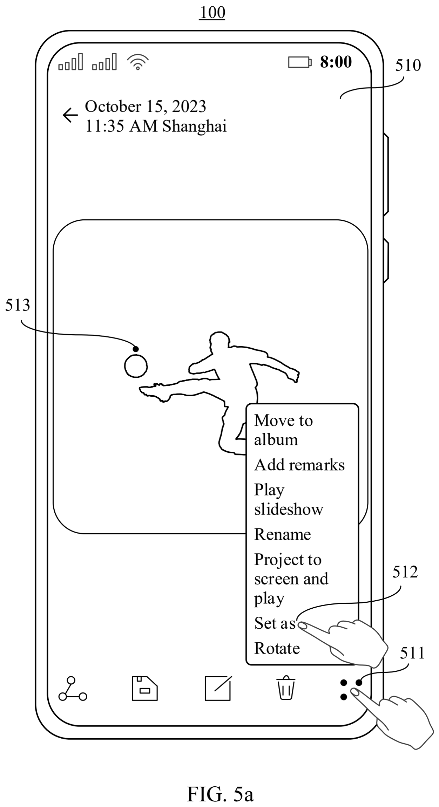

For example, FIG. 5a to FIG. 5d are diagrams of a target interface set in a process in which a user sets a lock screen interface on a mobile phone.

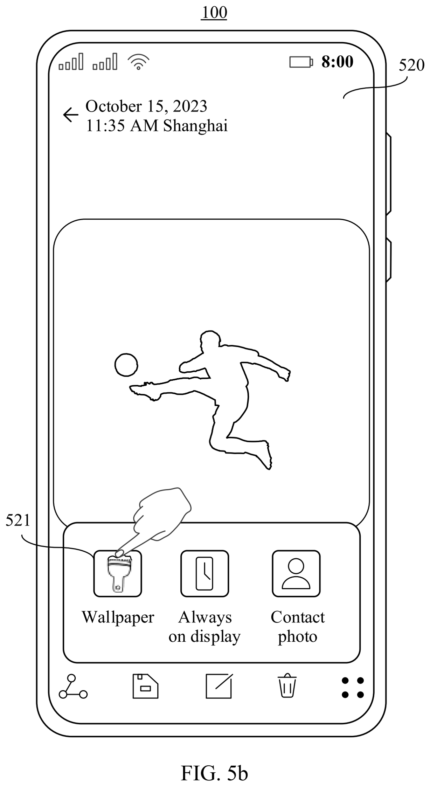

Refer to FIG. 5a. When browsing an image in a gallery of the mobile phone 100, the user may tap a control 511 in an image browsing interface 510, and select a "set to" option 512, so that the mobile phone 100 displays a setting interface 520 shown in FIG. 5b.

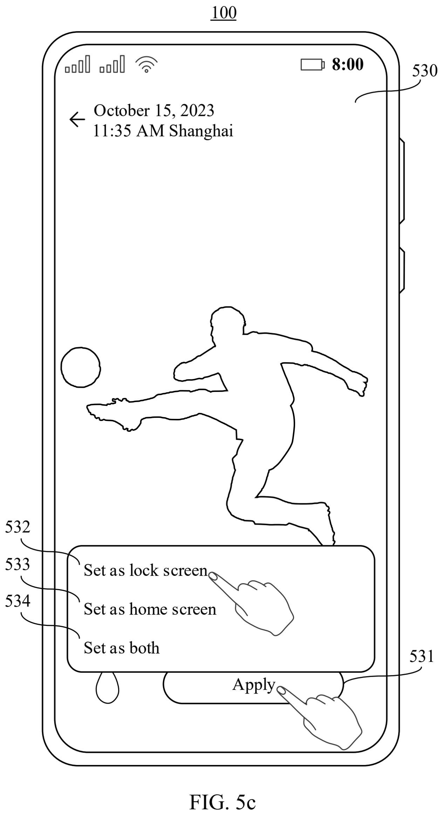

Still refer to FIG. 5b. The user may tap a "wallpaper" option 521 in the setting interface 520, to set the current image as the wallpaper. In this case, in response to a setting operation of the user, the mobile phone 100 may display a setting interface 530 shown in FIG. 5c.

Still refer to FIG. 5c. The user may tap an "apply" control 531 in the setting interface 530, to set the current image as a "lock screen wallpaper" and/or a "home screen wallpaper". For example, the user may tap a "set as lock screen" option 532 in the setting interface 530, to set the current image as the lock screen wallpaper. For another example, the user may alternatively tap a "set as home screen" option 533 in the setting interface 530, to set the current image as the home screen wallpaper. For another example, the user may alternatively tap a "set as both" option 534 in the setting interface 530, to set the current image as both the lock screen wallpaper and the home screen wallpaper. This is not limited herein.

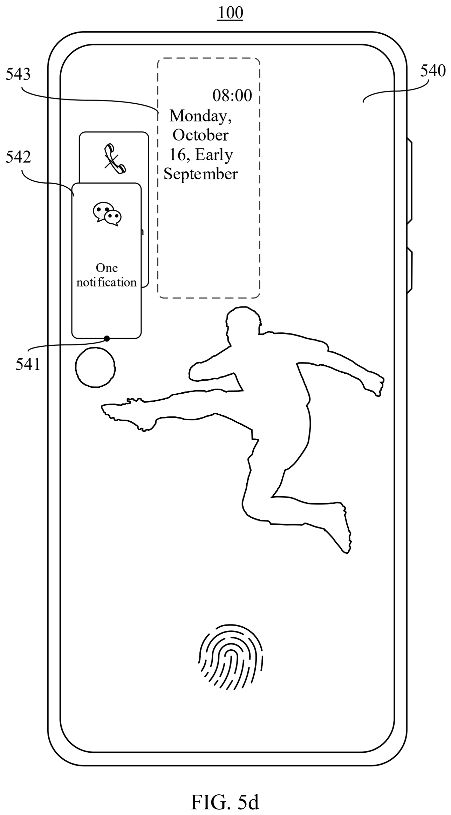

Correspondingly, when detecting the setting operation of the user, the mobile phone 100 may perform step 402 to step 410 to complete a process of drawing, rendering, and composing the lock screen interface that is correspondingly set by the setting operation, and finally may display a lock screen interface 540 shown in FIG. 5d. For specific display effect of the lock screen interface after setting, refer to related descriptions in step 410 below. Details are not described herein.

402: Perform image semantic understanding on the original background image, to obtain image semantic information.

For example, when detecting the setting operation performed by the user, the mobile phone 100 may perform image semantic understanding on the original background image to be set as the background image, namely, the original background image, to obtain the image semantic information corresponding to the original background image.

It may be understood that the image semantic understanding is natural language understanding (natural language processing, NLP) based on image content. In this embodiment of this application, the process of the image semantic understanding may be implemented by using some image semantic understanding systems or models. A complete image understanding system may usually include the following four layers: a data layer, a description layer, a cognitive layer, and an application layer.

The data layer is used to obtain image data, including a binary image, a grayscale image of a color photo, a color image, a depth image, and the like, and mainly relates to image compression and transmission processes. A main operation object of the layer is a pixel.

The description layer is used to extract features, measure a similarity between features, and reflect a distance between feature vectors. In a measurement process, a data dimension reduction method like subspace (subspace) may be used, including independent component analysis (independent component analysis, ICA), principal component analysis (principal component analysis, PCA), and the like. After dimension reduction, pixel feature data of an image may be further symbolized, to facilitate subsequent image understanding and calculation. A main task of the layer is to symbolize a pixel (pixel) representation.

The cognitive layer is used to perform image understanding, that is, perform learning and inference (learning and inference) on a pixel identified by a symbol. It may be understood that the cognitive layer is an "engine" of the image understanding system. A task of the layer is very complex, and further includes establishment of a related database and the like. A main processing object of the cognitive layer is a symbol, for example, the symbolized pixel representation. This is not limited herein.

The application layer may design a corresponding classifier, a learning algorithm, and the like based on a task requirement, for example, a classification task, an identification task, or a detection task. The classifier, the learning algorithm, and the like designed at the application layer may finally output a classification result, image semantic information, and the like of a to-be-understood image. Details are not described.

In this embodiment of this application, the system, the model, or the like configured to implement the image semantic understanding corresponding to step 402 is not specifically limited. An electronic device like the mobile phone 100 may perform, by using a pre-trained image semantic understanding system, model, or the like, image semantic understanding on the original background image set by the user as the background image of the set target interface, to obtain the image semantic information corresponding to the image.

403: Extract a related feature of a salient subject based on the image semantic information.

For example, the mobile phone 100 performs semantic segmentation on the image semantic information correspondingly obtained in the image semantic understanding process, and extracts fields that can express different area location information from the semantic information. The field correspondingly determined in the semantic segmentation process may include a field that describes a salient subject, for example, a person, an animal, a plant, food, a building, or a landscape, in the original background image. In addition, the field correspondingly determined in the semantic segmentation process may further include a related feature of the salient subject, for example, an action-related feature "kick", "run", "jump", "grasp", or "hold" and the salient subject.

Optionally, when there are a plurality of salient subjects in the original background image, the mobile phone 100 may determine, according to a preset salient subject screening rule, a representative salient subject in the plurality of salient subjects as a constraint for subsequent interface composition. In some embodiments, the representative salient subject may include a common salient subject, for example, a person corresponding to a face that is frequently recognized in a historical record of facial recognition performed by the mobile phone 100. In some other embodiments, the representative salient subject may alternatively include a subject with a high salient degree, for example, a subject that is at a middle location or that stands more forward in a plurality of salient subjects, or a subject that has a largest action amplitude in a plurality of salient subjects. This is not limited herein.

Optionally, when there are a large quantity of related features of the salient subject in the original background image, for example, when a person subject in the original background image has a plurality of action-related features including raising an arm, lifting a leg, kicking a ball, and the like, the mobile phone 100 may determine, according to a preset related feature screening rule, a representative feature in the plurality of action-related features as a constraint for the subsequent interface composition. In some embodiments, the representative feature may be, for example, a feature with a large action amplitude in the plurality of action-related features. In some other embodiments, the representative feature may alternatively include, for example, a feature with a large object of the action or a feature with a forward location in the image. This is not limited herein.

404: Obtain preset layout rules of one or more components that need to be displayed in the set target interface.

For example, the set target interface in which the user operation is performed may include the one or more components that need to be displayed, including a clock component, a notification component, and the like in the lock screen interface, a widget component in the home screen, a message bubble component in a chat interface, and the like. This is not limited herein. Because content that needs to be displayed by each component is different, a display location (namely, a component location), a component size (for example, an aspect ratio), a component color, and the like of each corresponding component in the set target interface may be different.

For example, in an operating system of an electronic device like the mobile phone 100, corresponding layout rules may be preset for the clock component, the notification component, and the like that are displayed in the lock screen interface. For example, the layout rule includes displaying the clock component in the center of an upper area of the set target interface, displaying clock information by using a preset font size, and displaying related parameters of the clock component by using a preset component color, a preset aspect ratio, and the like. The layout rule may further include displaying a lock screen notification below the clock component, displaying notification information by using a preset font size, and displaying related parameters such as a window color, a font color, and a window aspect ratio of the lock screen notification. Details are not described.

405: Determine a composition layout parameter of the set target interface based on the related feature of the salient subject and the preset layout rules of the one or more components.

For example, after determining the related feature of the salient subject in the original background image set as the background image and the preset layout rules of the one or more components that need to be displayed, the mobile phone 100 may determine the composition layout parameter of the set target interface by comprehensively considering the related feature of the salient subject, the component color, the component location, the component size, a screen size, and the like. The determining process may be implemented, for example, through intent recognition and slot replacement.

It may be understood that a subfield of the NLP may include natural language understanding (natural language understanding, NLU). Two most critical tasks of the NLU include intent recognition and slot filling. The intent recognition is a process of recognizing a purpose of the salient subject expressed in the image semantic information corresponding to the original background image. For example, when the salient subject is a person, an animal, or the like, an intent recognized in the intent recognition process may include some common behavior actions of the person, the animal, or the like, for example, kicking, crossing, holding, taking, carrying, watching, or eating. One or more slots may be correspondingly configured for each intent.

The slot is key information that needs to be extracted by the NLU model from the image semantic information, for example, an action subject or an action object corresponding to an action-related feature recognized as an "intent". The slot may include an attribute like a slot value. The slot value is a specific parameter of the slot, and may also be referred to as an entity of the slot.

For the image semantic information corresponding to the image shown in FIG. 5a or FIG. 5b, an intent recognition result implemented by the mobile phone 100 by running the NLU model may include:

```
         "{
          Intent: {kick},
          Slot: {
                    Action subject: {foot}
                    Action object: {football}
                }
         }"
```

In some other embodiments, for action-related features or other features with interactive intents of different salient subjects, the mobile phone 100 may also identify another intent and an operation combination based on the NLU model, for example, a combination formed by an intent "hold", an action subject "hand", and an action object "rapeseed flower" and the like. This is not limited herein.

For the intent recognition result, after attribute fields such as "category, location, and color" are adaptively extended for the content of the original background image as a foreground and a background of the set target interface, slot values corresponding to the corresponding fields may be added, to obtain the following intent recognition result including the slot values:

```
         {
             Intent: {kick},
             Slot: {
                      Action subject: {foot, [920, 810, 100, 100], black},
                      Action object: {football, [600, 200, 300, 400], white},
                      Foreground: {player, [0, 400, 920, 1120], white},
                      Background: {football field, [0, 0, 1080, 330], green}
                      }
         }
```

[920, 810, 100, 100] in the slot may represent relative coordinates of a specified location on the original background image, and the location coordinates may represent, for example, relative coordinates corresponding to a location at which interaction can be formed with the action "kick" of the action subject "foot", for example, as shown in FIG. 5a, relative coordinates corresponding to a location 513 above the football that the player "kicks". It may be understood that the relative coordinates may be a coordinate parameter relative to a corner point of the original background image, may be a coordinate parameter relative to an image preview origin preset in the mobile phone 100, or the like. This is not limited herein.

Correspondingly, [600, 200, 300, 400] in the slot represents relative coordinates of a location of the action object "football", [0, 400, 920, 1120] represents relative coordinates of a location of the foreground object "player" to which the action subject "foot" belongs, [0, 0, 1080, 330] represents relative coordinates of a location of the background "football field", and the like. Details are not described.

It may be understood that, in specific application, an intent category and a slot configured for each intent category may be preset. For example, for an image including a salient subject like a person or an animal, an intent category corresponding to an action-related feature like kicking, crossing, holding, taking, carrying, watching, or eating may be preset. For a landscape image including a salient subject like a building, food, a representative scenic spot, or an obvious feature object, an up, down, left, or right orientation, another interactive feature, or the like of the subject may be preset as an intent category. This is not limited herein.

Slot replacement is performed based on the intent recognition result including the slot value, to obtain the composition layout parameter corresponding to the salient subject and the related component. For example, based on the intent recognition result in the example, the mobile phone 100 may replace a component location coordinate parameter in the preset layout rule of the related component with [920, 810, 100, 100] in the "action subject" slot, so that the correspondingly preset component location of the related component is modified to the location of [920, 810, 100, 100] correspondingly indicated on the original background image. As described above, at this location, the component can interact with the action subject in the original background image, namely, the "foot" of the "player". In addition, the preset component color in the preset layout rule of the related component may also be replaced with a color channel parameter corresponding to "black" in the "action subject" slot.

In this way, an interactive relationship can be established between the related component and the salient subject of the related image, to improve interaction and interest between the component in the set target interface and the background image.

Based on the composition layout parameter determined in step 405, the following continues to describe a process of performing aesthetic scoring on the composition determined based on the composition layout parameter and screening out a recommended layout parameter corresponding to recommended composition in step 406 to step 408.

406: Determine a plurality of cropped areas in the original background image based on a size parameter of a cropping frame in the composition layout parameter.

For example, the size parameter of the cropping frame may include parameters such as a length and a width of the cropping frame. The mobile phone 100 implements the recommended layout parameter correspondingly determined in step 405, and may determine the size and the location of the salient subject, the size and the location of the related component, the aspect ratio of the display, and the like. Based on these parameters, the mobile phone 100 may determine the size parameter of the cropping frame used to obtain the original background image through cropping. A length of the cropping frame may be less than or equal to an original length of the original background image, and a width of the cropping frame may be less than or equal to a width of the original background image. In addition, an aspect ratio of the cropping frame may be the same as an aspect ratio of the screen of the mobile phone 100.

It may be understood that, when the cropping frame is located at a different location on the original background image, a corresponding cropped area selected through the cropping frame also changes. Therefore, the mobile phone 100 can determine one or more cropped area in the original background image based on the size parameter of the cropping frame. An image in each cropped area may be used as a background image of the set target interface, and is combined with a related component to form a composition result. However, aesthetic degrees of composition formed by combining different cropped areas and related components are different. For details, refer to related descriptions in step 408. Details are not described herein.

407: Determine, based on a component-related parameter in the composition layout parameter, composition formed by laying out each component in each cropped area.

For example, the component-related parameter in the recommended layout parameter may include related parameters such as the component size, the component location, and the component color. This is not limited herein. The mobile phone 100 may determine, based on the component-related parameter, a layout location and size, and the like of each component on the image of each cropped area, that is, may determine the composition formed by the background image and the component in each cropped area.

It may be understood that, in a process of laying out a component to the cropped area to determine the composition of the set target interface, a size of the component displayed in the set target interface may be fixed to the size of the component in the preset layout rule, that is, a size parameter of the related component may not be changed. In some other embodiments, in a process in which the mobile phone 100 correspondingly determines the recommended layout parameter in step 405, the mobile phone 100 may alternatively perform scaling adjustment on the size of the component displayed in the set target interface, for example, adaptively adjust the size of the component based on the size of the salient subject. This is not limited herein.

408: Perform aesthetic scoring on the composition formed by laying out the related component in each cropped area.

For example, the composition is formed by combining each cropped area image related to the salient subject of the original background image and the related component. A system service of the mobile phone 100, for example, a wallpaper service, may provide an aesthetic scoring function. For example, the wallpaper service of the mobile phone 100 may perform, in response to invoking of an application like a home screen or a wallpaper, aesthetic scoring on the plurality of pieces of composition formed by laying out the related components in the cropped areas. Further, the mobile phone 100 may continue to perform step 409 based on an aesthetic scoring result, to screen out a composition layout parameter with a highest score or another composition layout parameter that meets a preset score screening condition.

409: Select, based on the aesthetic scoring result as the recommended layout parameter, a composition layout parameter corresponding to composition that meets the score screening condition.

For example, the score screening condition may include, for example, a condition of screening out a highest score in sorted aesthetic scores, or a condition of screening out an aesthetic score higher than a preset score threshold. The preset score threshold may include one score, or may include a multi-level threshold condition of a plurality of scores and the like. This is not limited herein. The mobile phone 100 may screen out, based on the preset score screening condition and the aesthetic scoring result as the recommended composition, the composition that meets the score screening condition. The composition layout parameter corresponding to the recommended composition may be used as the recommended layout parameter, and is provided for the home screen application, the wallpaper application, or the like, for drawing, rendering, composition, and display in step 410.

It may be understood that a process in which the mobile phone 100 performs step 406 to step 409 may be implemented by integrating constraint-based saliency detection and a composition scoring model. The composition scoring model can screen out, based on the aesthetic scoring result of each composition formed by separately laying out the related component in each cropped area, composition with high aesthetics, and recommend the composition to the mobile phone 100 for drawing, rendering, composition, and display.

Specifically, the mobile phone 100 implements, based on the composition scoring model, a process that is correspondingly performed in step 406 to step 409 and that is of performing aesthetic scoring on the related composition and determining the recommended layout parameter corresponding to the recommended composition. Details are described below with reference to related accompanying drawings, and are not described.

410: In response to a user operation of locking the screen or switching back to the home screen, display the target interface that is rendered and composed based on the selected recommended layout parameter.

For example, after determining the recommended layout parameter that can ensure both interaction and aesthetics, the mobile phone 100 may display, in response to the lock screen operation performed by the user, a lock screen interface obtained by performing drawing, rendering, and composition based on the recommended layout parameter. Alternatively, the mobile phone 100 may display, in response to the operation of switching back to the home screen performed by the user, a home screen obtained by performing drawing, rendering, and composition based on the recommended layout parameter.

For example, the mobile phone 100 may display the lock screen interface shown in FIG. 5d based on an implementation result of step 401 to step 410. Refer to FIG. 5d. In the lock screen interface 540, a lock screen notification 542 may be displayed at a location 541 above the football that the player "kicks", and a clock component 543 and the like may be displayed near the notification 542. In this way, an interactive relationship can be established between the lock screen notification 542, the clock component 543, and the "kick" action performed by the "foot" of the player in the background image of the lock screen interface 540, so that the lock screen interface 540 has interaction and aesthetics.

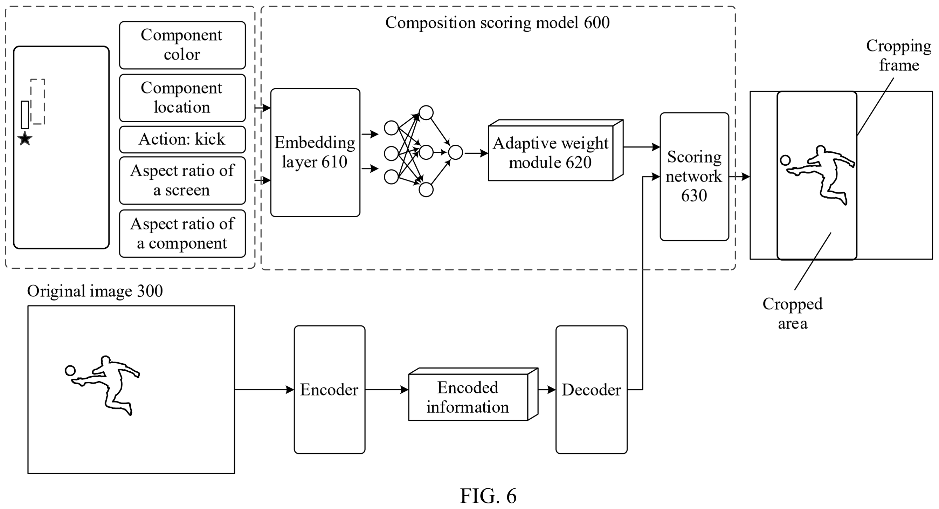

For a process that is correspondingly performed in step 405 to step 409 and that is of determining the composition layout parameter and performing aesthetic scoring on the related composition to determine the recommended layout parameter corresponding to the recommended composition, refer to an implementation process shown in FIG. 6.

Specifically, FIG. 6 is a diagram of a process in which a composition scoring model determines a recommended layout parameter based on a layout constraint of an input model according to an embodiment of this application. It may be understood that the process shown in FIG. 6 may be implemented by using the composition scoring model or a related algorithm preset in the mobile phone 100. For example, the composition scoring model may be a neural network model, for example, may be obtained through CNN or RNN training.

As shown in FIG. 6, an input end of the composition scoring model 600 may include an embedding (embedding) layer 610, also referred to as a mapping layer. In this embodiment of this application, the layer may convert (or map) an intent slot and a slot field (field for short) determined based on processes such as understanding of image semantic information, intent recognition, and slot filling into vectors that can be recognized by a computer and that have fixed sizes. In addition, the embedding layer may alternatively convert a one-hot vector into a dense vector, convert a high-dimensional sparse feature vector into a low-dimensional dense feature vector, or the like. This is not limited herein.

Still refer to FIG. 6. Fields input to the embedding layer 610 of the composition scoring model 600 may include at least a component size and a screen size, and may further include a component location, a component color, an action-related feature (namely, the intent field) of a salient subject, an action object, and the like. This is not limited herein. The screen size may include an aspect ratio (ratio) of a screen, for example, 16:9 or another ratio. The component size may also include a length and a width of a component, for example, [200,800]. It may be understood that an aspect ratio of the component may be the same as or similar to the aspect ratio of the screen, to improve composition aesthetics. A process of performing embedding mapping for each constraint includes, for example, mapping the component location, the aspect ratio of the screen, the component color, the action-related feature of the salient subject, and the like to an N-dimensional vector, for example, a 1024-dimensional vector.

After each field input to the embedding layer is mapped to a vector of a corresponding dimension, the vector may be further output to an adaptive weight module 620 of the composition scoring model 600 as a layout constraint, and a corresponding weight is calculated for each layout constraint. The adaptive weight module 620 may obtain, according to an algorithm or through neural network training, a capability of calculating the corresponding weight for each layout constraint.

It may be understood that the process of calculating the corresponding weight for each layout constraint may include adaptively configuring a high weight value for an important layout constraint, for example, the component size, the component location, the screen size, and the action-related feature. Alternatively, a low weight value may be adaptively configured for a less important layout constraint, for example, the component color or the action object. This is not limited herein. After the weight value corresponding to each layout constraint is determined, the adaptive weight module 620 may output each layout constraint and the corresponding weight value to a scoring network 630 of the composition scoring model 600. The weight value corresponding to each layout constraint may affect an aesthetic scoring result of the composition scoring model 600 on related composition. For details, refer to the following related descriptions.

Still refer to FIG. 6. After performing image encoding on an original background image 300 by using an encoder, the mobile phone 100 may provide, for a wallpaper service in which the composition scoring model 600 is preset, corresponding encoded information obtained through encoding. Then, after running the wallpaper service, the mobile phone 100 may decode the received encoded information by using a decoder, and may also use the decoded encoded information as an input of the scoring network 630 of the composition scoring model 600.

Further, the scoring network 630 may analyze, based on the layout constraints and the corresponding weight values, saliency of the salient subject in the original background image obtained through decoding, determine cropped areas that are related to the salient subject and that match a size of a cropping frame, correspondingly calculate aesthetic scores of related composition, and finally screen out a cropped area that meets a score screening condition and a corresponding recommended layout parameter. The recommended layout parameter is the parameter correspondingly determined by the mobile phone 100 by performing step 409.

In some other embodiments, content correspondingly performed in step 402 and step 403 may be described as an image semantic understanding (NLP) process and a natural language understanding (NLU) process for the image semantic information, and the intent information and the slot information that are related to the salient subject in the original background image may be determined in the processes.

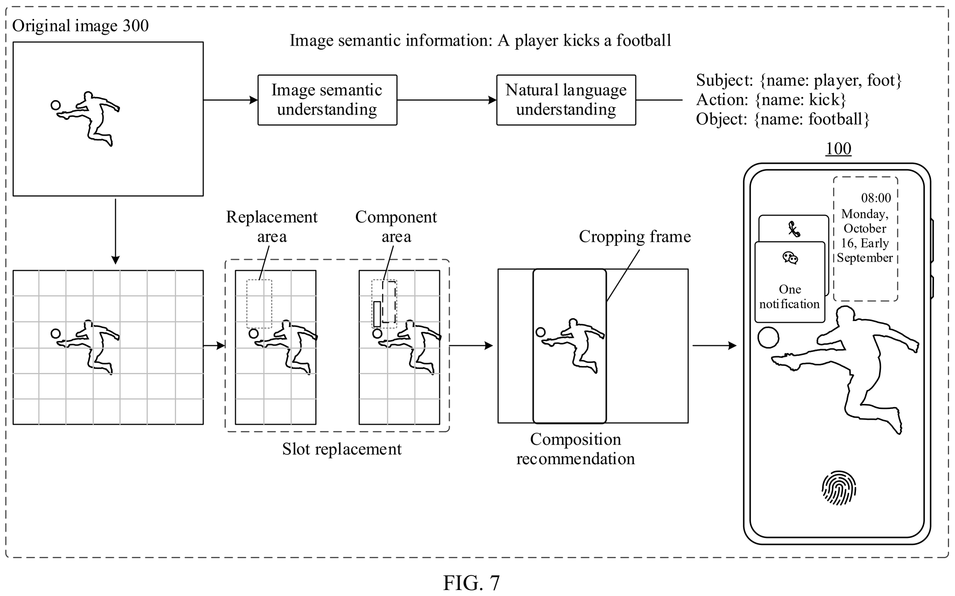

Refer to FIG. 7. For the original background image 300, the image semantic information correspondingly determined in the NLP process may be, for example, "the player kicks the football" shown in FIG. 7, the intent information correspondingly determined in the NLU process may include, for example, "subject: {name: player, foot}" shown in FIG. 7, and the slot information may include, for example, "action: {name: kick} and slot: {name: football}" shown in FIG. 7.

Content correspondingly performed in step 404 to step 407 may be described as a slot replacement process. In the process, the slot information determined and extended in the NLU process may be used to replace the related layout parameter of the component that needs to be laid out for display in the set target interface, to determine the interactive relationship between each component and the salient subject. In the slot replacement process, the correspondingly determined composition layout parameter may limit the component location, the component size, the component color, and the like of each component in the set target interface, the size of the cropping frame used to obtain, from the original background image through cropping, a part of a cropped area image including the salient subject, and the like. Refer to FIG. 7. The slot replacement process may be, for example, adjusting relative coordinates of the component location in the preset layout rule of the related component based on relative coordinates of a reference location in a replacement area shown in FIG. 7, and adjusting the component size of the related component based on a recommended size of the replacement area, to form a component area shown in FIG. 7.

Content correspondingly performed in step 408 and step 409 may be described as a composition recommendation process. In the process, aesthetic scoring may be performed on the composition result corresponding to the composition layout parameter determined through slot replacement. The aesthetic scoring process may be synchronously performed in the process of correspondingly mapping the cropped area on the original background image based on the size of the cropping frame and the like in the composition layout parameter. In the aesthetic scoring process, the recommended composition that meets the score screening condition may be output in time based on the preset score threshold, or the recommended composition that meets the score screening condition may be determined after the aesthetic scores corresponding to the cropped areas are comprehensively sorted. This is not limited herein.

Refer to FIG. 7. In the composition recommendation process, for example, the cropping frame of the background image may be obtained through cropping on the original background image 300. The cropped area that is correspondingly obtained through cropping by the cropping frame and that is used as the background image may be the cropped area corresponding to the composition with the highest score in the aesthetic scores.

Based on the foregoing descriptions with reference to the related accompanying drawings, it may be understood that, according to the display method provided in this embodiment of this application, based on the related feature of the salient subject in the original background image set as the background image of the set target interface, the layout parameter of the at least one component that needs to be displayed on the background image of the set target interface is optimized, so that the interactive relationship is generated between the component in the set target interface and the salient subject, and the set target interface is interactive and interesting. In addition, according to the display method provided in this embodiment of this application, in the process of determining the recommended layout parameter, the cropped area with higher aesthetics can be screened out based on the aesthetic scoring result as the composition of the set target interface. This also helps improve display aesthetics of the set target interface.

It may be understood that, in some other embodiments, the display method provided in this application may alternatively include another implementation. The following provides descriptions with reference to Embodiment 2.

### Embodiment 2

An embodiment of this application describes a specific implementation process of a display method in the application scenario shown in FIG. 1. In the implementation process, a location and a size of each component that needs to be displayed in a set target interface are properly laid out, to form an interactive and aesthetic layout of the set target interface. In addition, because calculation processing processes such as performing saliency analysis on an original background image by using a scoring network and performing aesthetic scoring on related composition are reduced, efficiency of responding to a user operation by an electronic device like a mobile phone is improved.

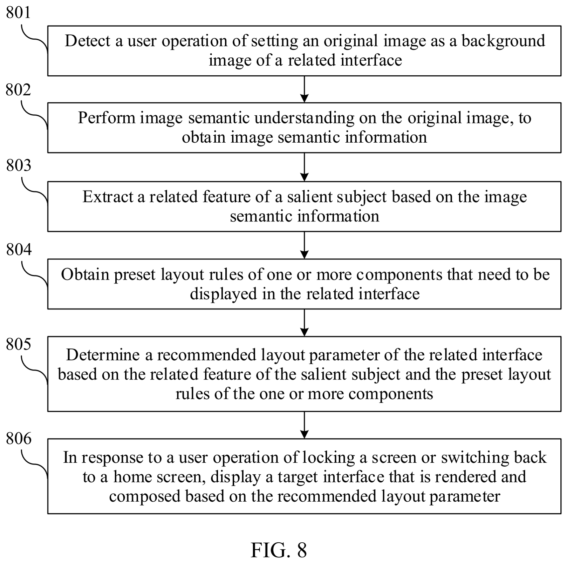

Specifically, FIG. 8 is a diagram of an implementation procedure of a display method according to this embodiment of this application. It may be understood that steps in the implementation procedure shown in FIG. 8 may be performed by an electronic device like a mobile phone or a tablet computer. This is not limited herein.

The following still uses an example in which the mobile phone 100 performs the steps to describe, in detail with reference to FIG. 8, the specific implementation process of the display method provided in this application.

As shown in FIG. 8, the implementation procedure may include the following steps.

801: Detect a user operation of setting an original background image as a background image of a set target interface.

802: Perform image semantic understanding on the original background image, to obtain image semantic information.

803: Extract a related feature of a salient subject based on the image semantic information.

804: Obtain preset layout rules of one or more components that need to be displayed in the set target interface.

An execution process of step 801 to step 804 is the same as that of step 401 to step 404 in Embodiment 1. For details, refer to the related descriptions of step 401 to step 404. Details are not described herein again.

805: Determine a recommended layout parameter of the set target interface based on the related feature of the salient subject and the preset layout rules of the one or more components.

For example, after determining the related feature of the salient subject in the original background image set as the background image and the preset layout rules of the one or more components that need to be displayed, the mobile phone 100 may determine the recommended layout parameter of the set target interface by comprehensively considering the related feature of the salient subject, a component color, a component location, a component size, a screen size, and the like.

It may be understood that, in the recommended layout parameter, a cropped area used as the background image may be an area obtained by performing center-aligned cropping on the salient subject in the original background image, or may be an area obtained by performing cropping according to another preset cropping rule. This is not limited herein.

806: In response to a user operation of locking the screen or switching back to the home screen, display the target interface that is rendered and composed based on the recommended layout parameter.

For example, after determining the recommended layout parameter that can ensure both interaction and aesthetics, the mobile phone 100 may display, in response to the lock screen operation performed by the user, a lock screen interface obtained by performing drawing, rendering, and composing based on the recommended layout parameter. Alternatively, the mobile phone 100 may display, in response to the operation of switching back to the home screen performed by the user, a home screen obtained by performing drawing, rendering, and composition based on the recommended layout parameter.

It may be understood that, in this embodiment of this application, the recommended layout parameter does not need to undergo calculation processing processes such as performing embedding mapping by using the composition scoring model, calculating the weight corresponding to each layout constraint, and screening out the recommended layout parameter corresponding to the recommended composition after performing aesthetic scoring on the related composition. Therefore, in this embodiment of this application, based on implementation of step 801 to step 806, quick response to an operation of setting the background image of the set target interface by the user can be implemented, and processing efficiency of cropping the related original background image and forming the composition of the set target interface can be improved. In addition, in this embodiment of this application, based on step 801 to step 806, interaction and interest between each component in the set target interface and the salient subject of the background image can also be improved.

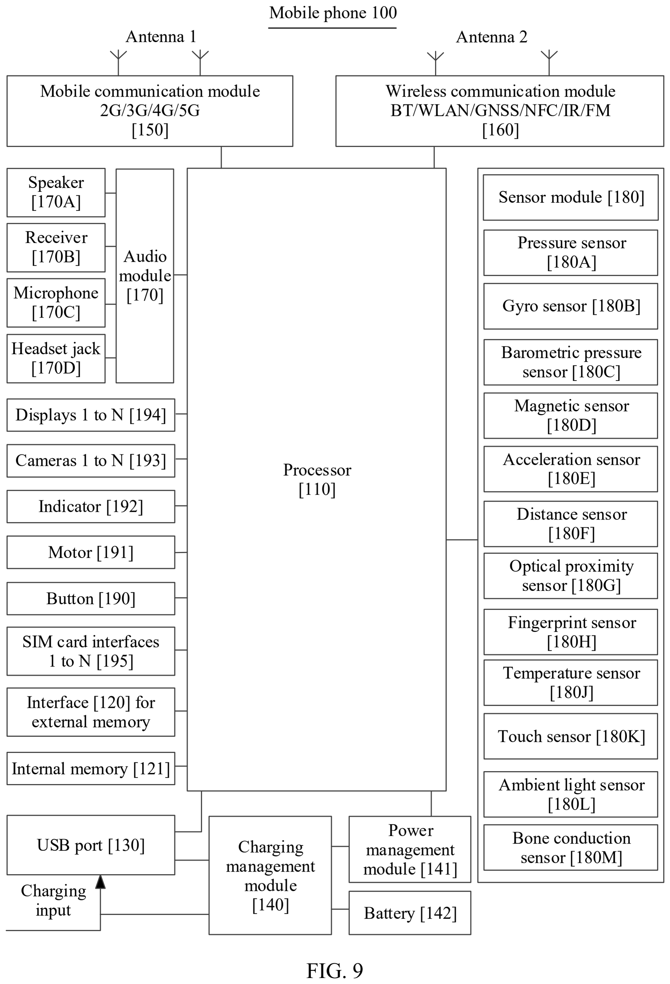

FIG. 9 is a diagram of a hardware structure of an electronic device according to an embodiment of this application.

In some embodiments of this application, the electronic device may be the mobile phone 100. In some other embodiments, the electronic device may alternatively be another electronic device like a tablet computer. This is not limited herein.

As shown in FIG. 9, the mobile phone 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the mobile phone 100. In some other embodiments of this application, the mobile phone 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on an instruction operation code and a time sequence signal, to complete control of instruction fetching and instruction execution.

In this embodiment of this application, the processor 110 of the mobile phone 100 may read, by using the controller, instructions related to execution content of step 401 to step 410 in Embodiment 1 or instructions related to execution content of step 801 to step 806 in Embodiment 2, and control execution of the related instructions, to implement the display method provided in this application.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instruction or data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, an SIM card interface, a universal serial bus (universal serial bus, USB) port, and/or the like.

The USB port 130 is a port that conforms to a USB standard specification, and may be specifically a mini USB port, a micro USB port, a USB Type-C port, or the like. The USB port 130 may be configured to connect to a charger to charge the mobile phone 100, or may be configured to perform data transmission between the mobile phone 100 and a peripheral device. The USB port 130 may alternatively be configured to connect to a headset, to play an audio through the headset. The port may alternatively be configured to connect to another electronic device like an AR device.

It may be understood that an interface connection relationship between the modules that is shown in this embodiment of the present invention is merely an example for description, and does not constitute a limitation on the structure of the mobile phone 100. In some other embodiments of this application, the mobile phone 100 may alternatively use an interface connection manner different from that in the foregoing embodiment, or use a combination of a plurality of interface connection manners.

The charging management module 140 is configured to receive a charging input from a charger. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, the display 194, the camera 193, the wireless communication module 160, and the like.

A wireless communication function of the mobile phone 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the mobile phone 100 may be configured to cover a single or a plurality of communication frequency bands. Different antennas may be further reused, to improve antenna utilization.

The mobile communication module 150 may provide a wireless communication solution that includes 2G/3G/4G/5G/5.5G or the like and that is applied to the mobile phone 100.

The wireless communication module 160 may provide a solution that is applied to the mobile phone 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology.

The mobile phone 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel.

The mobile phone 100 may implement a photographing function by using the ISP, the camera 193, the video codec, the GPU, the display 194, the application processor, and the like. The ISP is configured to process data fed back by the camera 193. The camera 193 is configured to capture a static image or a video. The digital signal processor is configured to process a digital signal, and may process another digital signal in addition to processing the digital image signal. The video codec is configured to: compress or decompress a digital video.

The interface 120 for external memory may be used to connect to an external storage card, for example, a micro SD card, to extend a storage capability of the mobile phone 100. The external memory card communicates with the processor 110 through the interface 120 for external memory, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a sound playing function or an image playing function), and the like. The data storage area may store data (for example, audio data or an address book) and the like created during use of the mobile phone 100. In addition, the internal memory 121 may include a high-speed random access memory, and may further include a nonvolatile memory, for example, at least one magnetic disk storage device, a flash memory, or a universal flash storage (universal flash storage, UFS). The processor 110 runs instructions stored in the internal memory 121 and/or instructions stored in a memory disposed in the processor, to perform various function applications of the mobile phone 100 and data processing.

The mobile phone 100 may implement an audio function by using the audio module 170, the speaker 170A, the receiver 170B, the microphone 170C, the headset jack 170D, the application processor, and the like, for example, music playing and recording.

The button 190 includes a power button, a volume button, and the like. The button 190 may be a mechanical button, or may be a touch button. The mobile phone 100 may receive a button input, and generate a button signal input related to a user setting and function control of the mobile phone 100.

The motor 191 may generate a vibration prompt. The motor 191 may be configured to provide an incoming call vibration prompt, or may also be configured to provide touch vibration feedback. For example, touch operations performed on different applications (for example, photographing and audio playing) may correspond to different vibration feedback effect. The motor 191 may also correspond to different vibration feedback effect for touch operations performed on different areas of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or pulled out of the SIM card interface 195, to implement contact with or separation from the mobile phone 100.

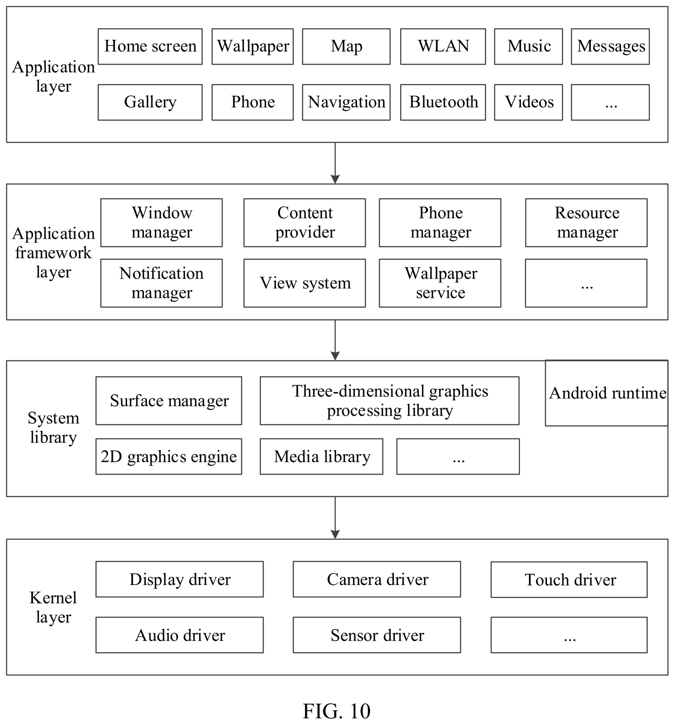

FIG. 10 is a diagram of a software structure of an operating system of an electronic device according to an embodiment of this application.

It may be understood that the operating system of the mobile phone 100 may use a layered architecture, an event-driven architecture, a microkernel architecture, a micro service architecture, or a cloud architecture. In embodiments of the present invention, an Android system of a layered architecture is used as an example to describe the system software structure of the mobile phone 100.

In the layered architecture, software is divided into several layers, and each layer has a clear role and task. The layers communicate with each other through a software interface. In some embodiments, the Android^{™} system is divided into four layers: which are respectively an application layer, an application framework layer, an Android^{™} runtime (Android^{™} runtime) and system library, and a kernel layer from top to bottom.

As shown in FIG. 10, the application layer may include a series of application packages. The application packages may include applications such as Home Screen, Gallery, Wallpaper, Phone, Map, Navigation, WLAN, Bluetooth, Music, Videos, and Messages.

The application framework layer provides an application programming interface (application programming interface, API) and a programming framework for an application at the application layer. The application framework layer includes some predefined functions.

The application framework layer may include a window manager, a content provider, a view system, a phone manager, a resource manager, a notification manager, a wallpaper service, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and received, a browsing history and bookmarks, an address book, and the like.

The view system includes visual controls such as a control for displaying text and a control for displaying an image. The view system may be configured to construct an application. A display interface may include one or more views. For example, a display interface including an SMS message notification icon may include a text display view and an image display view.

The phone manager is configured to provide a communication function of the mobile phone 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without user interaction. For example, the notification manager is configured to notify download completion, give a message notification, and the like. The notification manager may alternatively be a notification that appears in a top status bar of the system in a form of a graph or scroll bar text, for example, a notification of an application that is run on the background, or may be a notification that appears on the screen in a form of a dialog window. For example, text information is displayed in the status bar, an alert tone is played, the electronic device vibrates, or the indicator light blinks.

In this embodiment of this application, the notification manager may further enable the notification message of the application to be displayed in a form of a lock screen notification of a lock screen interface. A display location of the lock screen notification in the lock screen interface may be determined based on the display solution provided in this application.

The wallpaper service may provide, for the home screen application, the wallpaper application, and the like at the application layer, functions of processing an original background image into a wallpaper and determining composition of a set target interface. In response to invoking of the home screen application, the wallpaper application, or the like, the wallpaper service may implement the related content of step 402 to step 409 in Embodiment 1 of this application, or implement the related content of step 802 to step 805 in Embodiment 2 of this application. For a specific implementation process, refer to the related descriptions of the foregoing related steps. Details are not described herein again.

The Android^{™} runtime includes a core library and a virtual machine. The Android^{™} runtime is responsible for scheduling and management of the Android^{™} system.

The core library includes two parts: a function that needs to be invoked in Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem and provide fusion of 2D and 3D layers for a plurality of applications. The media library supports playback and recording of audios and videos in a plurality of commonly used formats, static image files, and the like. The media library may support a plurality of audio and video coding formats, for example, MPEG-4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, and a sensor driver.

An embodiment of this application further provides a computer program product, configured to implement the display method provided in the foregoing embodiments.

Embodiments of a mechanism disclosed in this application may be implemented in hardware, software, firmware, or a combination of these implementation methods. Embodiments of this application may be implemented as a computer program module or module code executed in a programmable system. The programmable system includes at least one processor, a storage system (including a volatile memory, a nonvolatile memory, and/or a storage element), at least one input device, and at least one output device.

The computer program module or the module code may be used for instruction inputting, to perform functions described in this application and generate output information. The output information may be applied to one or more output devices in a known manner. For purposes of this application, a processing system includes any system having a processor, for example, a digital signal processor (digital signal processor, DSP), a microcontroller, an application-specific integrated circuit (application-specific integrated circuit, ASIC), or a microprocessor.

The module code may be implemented in a high-level modular language or an object-oriented programming language, to communicate with the processing system. The module code may alternatively be implemented in an assembly language or a machine language when necessary. Actually, the mechanisms described in this application are not limited to a scope of any particular programming language. In any case, the language may be a compiled language or an interpretive language.

In some cases, the disclosed embodiments may be implemented in hardware, firmware, software, or any combination thereof. The disclosed embodiments may be alternatively implemented as instructions carried by or stored on one or more temporary or non-temporary machine-readable (for example, computer-readable) storage media, and the instructions may be read and executed by one or more processors. For example, the instructions may be distributed over a network or through another computer-readable medium. Therefore, the machine-readable medium may include any mechanism for storing or transmitting information in a machine (for example, a computer)-readable form. The machine-readable medium includes but is not limited to a floppy disk, a compact disc, an optical disc, a magnetic optical disc, a read-only memory (read-only memory, ROM), a random access memory (random access memory, RAM), an erasable programmable read-only memory (erasable programmable read-only memory, EPROM), an electrically erasable programmable read-only memory (electrically erasable programmable read-only memory, EEPROM), a magnetic card, an optical card, a flash memory, or a tangible machine-readable memory used to transmit information (for example, a carrier, an infrared signal, or a digital signal) by using a propagating signal in an electrical, optical, acoustic, or another form over the internet. Therefore, the machine-readable medium includes any type of machine-readable medium that is suitable for storing or transmitting electronic instructions or information in a machine (for example, a computer)-readable form.

Reference to "one embodiment" or "an embodiment" in the specification means that specific features, structures, or characteristics described with reference to the embodiment are included in at least one example implementation solution or technology disclosed according to this embodiment of this application. The phrase "in one embodiment" appearing in various places in the specification does not necessarily all mean a same embodiment.

The disclosure of embodiments of this application further relates to an apparatus for performing operations in the text. The apparatus may be constructed dedicatedly for the required purpose or may include a general-purpose computer that is selectively activated or reconfigured by a computer program stored in the computer. Such a computer program may be stored in a computer-readable medium, for example, but not limited to any type of disk, including a floppy disk, a compact disc, a CD-ROM, a magnetic optical disc, a read-only memory (ROM), a random access memory (RAM), an EPROM, an EEPROM, a magnetic or optical card, an application-specific integrated circuit (ASIC), or any type of medium suitable for storing electronic instructions. In addition, each of them may be coupled to a computer system bus. In addition, the computer mentioned in the specification may include a single processor or may be an architecture involving a plurality of processors for increased computing capabilities.

In addition, the language used in the specification is already mainly selected for readability and instructional purposes and may not be selected to depict or limit the disclosed topics. Therefore, embodiments of this application are intended to describe but not to limit the scope of the concepts discussed in the specification.

## Claims

1. A display method, applied to an electronic device and comprising:
detecting an interface display instruction; and
displaying a first interface in response to the interface display instruction, wherein the first interface comprises at least one first foreground element and a first background image area in a first background image, wherein
a display parameter of the first foreground element in the first background image area comprises a location parameter of the first foreground element, and the location parameter is related to semantic information of at least one display element in the first background image area.

2. The method according to claim 1, wherein the semantic information comprises one or more the following features:
an action-related feature; and
a form-related feature.

3. The method according to claim 2, wherein the action-related feature comprises one or more of the following features:
a feature used to describe an action; and
a feature used to describe an object of the action.

4. The method according to claim 2, wherein the form-related feature comprises one or more of the following features:
a feature used to describe a form; and
a feature used to describe an extension direction of the form.

5. The method according to any one of claims 1 to 4, wherein before displaying the first interface, the method further comprises:
performing image semantic understanding on the first background image, to obtain the semantic information related to the at least one display element and area location information corresponding to a feature comprised in the semantic information;
determining first area location information corresponding to a first feature in the feature comprised in the semantic information; and
determining the location parameter of the first foreground element based on the first area location information.

6. The method according to claim 5, wherein the first feature is a feature used to describe an object of an action, and
determining the location parameter of the first foreground element based on the first area location information comprises:
determining the first area location information as the location parameter of the first foreground element.

7. The method according to any one of claims 1 to 4, wherein the display parameter further comprises a color parameter of the first foreground element, and
the color parameter is related to one or more of the following colors:
an initial color of the first foreground element;
a background color of an area in which a feature used to describe an object of an action is located;
a background color of an area in which a feature used to describe an extension direction of a form is located; and
a color of a first display element in the at least one display element.

8. The method according to claim 5, wherein a manner of determining the first background image area comprises:
determining, based on a screen size of the electronic device, a size parameter of a first cropping frame used to obtain the first background image area by cropping the first background image;
determining, based on first semantic information of a first display element, location information of the first display element in the first background image, and a size parameter of the first display element, at least one cropped area that meets the size parameter of the first cropping frame and that comprises the first display element, wherein the at least one display element comprises the first display element; and
determining a first cropped area in the at least one cropped area as the first background image area.

9. The method according to claim 8, wherein the size parameter of the first cropping frame is further related to a size parameter of the first foreground element, and the manner of determining the first background image area comprises:
determining the size parameter of the first cropping frame based on the screen size of the electronic device and the size parameter of the first foreground element.

10. The method according to claim 8 or 9, wherein the at least one cropped area is a plurality of cropped areas, and
determining the first cropped area in the at least one cropped area as the first background image area comprises:
performing aesthetic scoring on the at least one cropped area, and determining the first cropped area whose aesthetic score meets a third condition as the first background image area, wherein
the third condition comprises that the aesthetic score is higher than a second threshold or is a highest value in aesthetic scores.

11. The method according to any one of claims 1 to 10, wherein the first interface comprises a lock screen interface or a home screen, and the interface display instruction comprises:
a display instruction that is correspondingly triggered by a first user operation and that instructs to display the lock screen interface; or
a display instruction that is correspondingly triggered by a second user operation and that instructs to display the home screen.

12. An electronic device, comprising one or more processors and one or more memories, wherein the one or more memories store one or more programs, and when the one or more programs are executed by the one or more processors, the electronic device is enabled to perform the display method according to any one of claims 1 to 11.

13. A computer-readable medium, wherein the readable medium stores instructions, and when the instructions are executed on a computer, the computer is enabled to perform the display method according to any one of claims 1 to 11.
